# EUROPÄISCHE PATENTANMELDUNG

(11) **EP 1 202 140 A2**
(43) Veröffentlichungstag der Anmeldung: **02.05.2002**
(21) Anmeldenummer: 01124911.7
(22) Anmeldetag: 18.10.2001
(51) Int. Cl.: G05B 19/042

(54) **Verfahren zur Bearbeitung von Daten in einer Datenverarbeitungsanlage und eine Vorrichtung zur Anwendung der Datenverarbeitungsanlage**

(30) Priorität: 24.10.2000 DE 10052727
(71) Anmelder: SIEMENS AKTIENGESELLSCHAFT, 80333 München (DE)
(72) Erfinder: Trapp, Lothar, 90537 Feucht (DE)

(57) **Zusammenfassung**

Die Erfindung betrifft ein Verfahren und eine Vorrichtung zur programmgesteuerten Abarbeitung von Daten in einer Datenverarbeitungsanlage, insbesondere zur Steuerung oder Regelung eines technischen Prozesses, wobei während der Durchführung des Verfahrens unterschiedliche Programmbereiche (2, 3, 4) in der Datenverarbeitungsanlage angesteuert werden. Dabei werden in mindestens einem ersten Programmbereich (2) Programmschritte abgearbeitet, die für alle Steuerungsaufgaben gültig sind, und in mindestens zwei weiteren Programmbereichen (3, 4) Programmschritte abgearbeitet, die jeweils für unterschiedliche Steuerungsaufgaben gültig sind. Ein Aufruf des jeweils gültigen weiteren Programmbereichs (3, 4) erfolgt durch ein Identifikationssignal (6, 7), das von der jeweiligen Steuerungsaufgabe bzw. einem zugeordneten Bauteil generiert wird.

## Beschreibung

Die Erfindung betrifft eine Datenverarbeitungsanlage, die von einem Datenverarbeitungsprogramm gesteuert wird und insbesondere für ein Automatisierungssystem zur Steuerung oder Regelung eines technischen Prozesses heranzuziehen ist.

Zur Lösung einer Steuerungsaufgabe oder zur Regelung eines Prozesses mit einer elektronischen Datenverarbeitungsanlage werden in der Regel entsprechende Anwenderprogramme in die Datenverarbeitungsanlage geladen. Hierbei sollen oft Vorrichtungen mit der Datenverarbeitungsanlage derart gesteuert werden, dass mit einem Typ von Steuerung in einer Vorrichtung zwar ähnliche aber doch unterschiedliche Aufgaben, z. B. in einer Anlage zur Herstellung von eventuell nur teilweise unterschiedlichen Produkten, erledigt werden sollen. Typischerweise wurden hierzu bisher unterschiedliche Anwenderprogramme für die verschiedenen Produkte geladen, wodurch die Instandhaltung und Wartung der Vorrichtung und der Datenverarbeitungsanlage relativ aufwendig ist.

Der Erfindung liegt daher die Aufgabe zugrunde, eine Datenverarbeitungsanlage und ein Verfahren zum Betrieb dieser Datenverarbeitungsanlage der eingangs genannten Art so fortzubilden, dass eine einfache Instandhaltung und Wartung der Anlage mitsamt des Anwenderprogramms auch für unterschiedliche Aufgaben möglich ist.

Gemäß der Erfindung ist in vorteilhafter Weise ein Verfahren, ein Software-Modul oder eine entsprechend aufgebaute Datenverarbeitungsanlage in einer Vorrichtung der eingangs genannten Art so weitergebildet, dass die gestellte Aufgabe gelöst wird. Mit der Erfindung ist in vorteilhafter Weise ermöglicht, dass während der Durchführung des Verfahrens unterschiedliche Programmbereiche in der Datenverarbeitungsanlage angesteuert werden können, wobei in mindestens einem ersten Programmbereich Programmschritte abgearbeitet werden, die für alle Steuerungsaufgaben gültig sind, und in mindestens zwei weiteren Programmbereichen Programmschritte abgearbeitet werden, die jeweils für unterschiedliche Steuerungsaufgaben gültig sind.

Das gemeinsame Anwenderprogramm im ersten Programmbereich deckt dabei alle identischen Funktionen ab, die auf den Steuerungen benötigt werden, auf denen es betrieben werden soll. Bevorzugt kann dann ein Aufruf des jeweils gültigen weiteren Programmbereichs zusätzlich zum eigentlichen gemeinsamen Anwenderprogramm durch ein Identifikationssignal erfolgen, das von der jeweiligen Steuerungsaufgabe generiert wird. Das Identifikationssignal wird z. B. von einer elektronischen Baugruppe, z. B. eine digitale Eingangsbaugruppe, geliefert, die zur Erfüllung der jeweiligen Steuerungsaufgabe eingesetzt ist.

Beispielsweise stammt das Identifikationssignal von der eindeutigen internen Verschaltung der elektronischen Baugruppe oder von der eindeutigen Netzadresse der elektronischen Baugruppe in einem Netzwerk bzw. es kann die Projektierung eines eindeutigen Identifikators, z. B. eines Anlagenkennzeichens oder eines Namens, ausgewertet werden. Diese Identifikation kann dann durch das Anwenderprogramm ausgelesen werden und dient dem Anwenderprogramm zur Auswahl und Steuerung der zu dieser Steuerung gehörigen Steuerungsfunktionalität.

Für die Durchführung des erfindungsgemäßen Verfahrens kann in vorteilhafter Weise ein Software-Modul bereitgestellt werden, das so aufgebaut ist, dass die Programmbereiche separat in Abhängigkeit von einem Identifikationssignal aufgerufen und abgearbeitet werden können.

Besonders vorteilhaft ist es, wenn mit einer Datenverarbeitungsanlage der zuvor beschriebenen Art in einer Vorrichtung Steuerungsaufgaben mit dem ersten Programmbereich abarbeitbar sind und mindestens zwei Steuerungsanordnungen vorhanden sind, die unter Erzeugung des Identifikationssignals mit einem jeweils vorgegebenen weiteren Programmbereich abgearbeitet werden. Hierbei kann die Vorrichtung eine Herstellungsanlage für eine Mehrzahl von zumindest teilweise unterschiedlichen Produkten sein, wobei diese Produkte mit teilweise unterschiedlichen Steuerungsaufgaben unter Bereitstellung eines einheitlichen Anwenderprogramms hergestellt werden.

Auf einfache Weise ist mit der Erfindung erreicht, dass die Herstellungsanlage leichter zu warten ist, da auf allen Steuerungen dasselbe Anwenderprogramm vorhanden ist. Nach dem Austausch eines defekten Steuerungsteils oder der gesamten Steuerung kann einfach das gemeinsame Anwenderprogramm wieder geladen werden, ohne dass Zuordnungsfehler auftreten.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird anhand des in der Zeichnung dargestellten Ausführungsbeispiels erläutert. Es zeigen:
- Figur 1: eine Prinzipdarstellung der Programmbereiche eines Anwenderprogramms für die Steuerung einer Herstellungsanlage,
- Figur 2: eine Prinzipdarstellung der aufgerufenen Programmbereiche für die Herstellung eines ersten Produkts und
- Figur 3: eine Prinzipdarstellung der aufgerufenen Programmbereiche für die Herstellung eines zweiten Produkts.

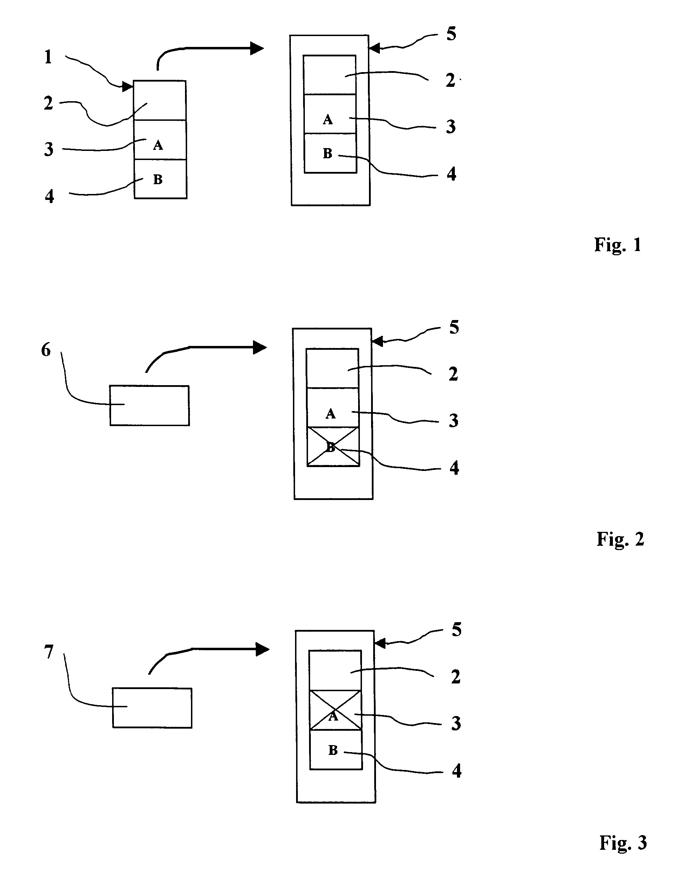

In Figur 1 ist im linken Teil ein Anwenderprogramm 1 schematisch als Blockschaltbild gezeigt, das aus einem ersten Programmbereich 2 besteht, der einen für alle Steuerungsaufgaben gemeinsamen Anwenderprogrammbereich darstellt. Innerhalb des Anwenderprogramms 1 sind weitere Programmbereiche 3 und 4 vorhanden, die für vorgegebene verschiedene Steuerungsaufgaben zuständig sind. Beispielsweise können in einer rechts dargestellten Steuerungsvorrichtung 5, deren Bestandteil das Anwenderprogramm 1 ist, mit den unterschiedlichen Steuerungsaufgaben der Programmbereiche 2 und 3 zwei oder gegebenenfalls mehrere unterschiedliche Produkte A und B hergestellt werden.

Zum Betrieb einer Herstellungsanlage mit der Steuerungsvorrichtung 5 wird zunächst ein Anwenderprogramm als Summe aller Anwenderprogrammbereiche 2, 3 und 4 erstellt und in die Steuerungsvorrichtung 5 geladen. Zur Herstellung des Produkts A wird dann zusätzlich zum gemeinsamen Programmbereich 2 der Programmbereich 3 und zur Herstellung des Produkts B wird der Programmbereich 4 verwendet.

In Figur 2 ist der Fall dargestellt, dass zur Herstellung des Produktes A der Aufruf des gültigen weiteren Programmbereichs 3 zusätzlich zum gemeinsamen Anwenderprogramm durch ein Identifikationssignal 6 erfolgt, das von der jeweiligen Steuerungsaufgabe generiert wird. Das Identifikationssignal kann dabei von einer hier nicht gezeigten elektronischen Baugruppe, z. B. eine digitale Eingangsbaugruppe, geliefert werden oder es kann auch von der Netzadresse der elektronischen Baugruppe in einem Netzwerk stammen.

In Figur 3 ist der andere Fall dargestellt, dass zur Herstellung des Produktes B der Aufruf des gültigen weiteren Programmbereichs 4 zusätzlich zum gemeinsamen Anwenderprogramm durch ein Identifikationssignal 7 erfolgt.

## Patentansprüche

1. Verfahren zur programmgesteuerten Abarbeitung von Daten in einer Datenverarbeitungsanlage, insbesondere zur Steuerung oder Regelung eines technischen Prozesses, **dadurch gekennzeichnet, dass** während der Durchführung des Verfahrens unterschiedliche Programmbereiche (2, 3, 4) in der Datenverarbeitungsanlage angesteuert werden, wobei in mindestens einem ersten Programmbereich (2) Programmschritte abgearbeitet werden, die für alle Steuerungsaufgaben gültig sind, und in mindestens zwei weiteren Programmbereichen (3, 4) Programmschritte abgearbeitet werden, die jeweils für unterschiedliche Steuerungsaufgaben gültig sind.

2. Verfahren nach Anspruch 1, **dadurch gekennzeichnet, dass** ein Aufruf des jeweils gültigen weiteren Programmbereichs (3, 4) durch ein Identifikationssignal (6, 7) erfolgt, das von der jeweiligen Steuerungsaufgabe generiert wird.

3. Verfahren nach Anspruch 2, **dadurch gekennzeichnet, dass** das Identifikationssignal (6, 7) von einer elektronischen Baugruppe geliefert wird, die zur Erfüllung der jeweiligen Steuerungsaufgabe eingesetzt ist.

4. Verfahren nach Anspruch 3, **dadurch gekennzeichnet, dass** das Identifikationssignal (6, 7) von der eindeutigen internen Verschaltung der elektronischen Baugruppe geliefert wird.

5. Verfahren nach Anspruch 3, **dadurch gekennzeichnet, dass** das Identifikationssignal (6, 7) von der eindeutigen Netzadresse der elektronischen Baugruppe in einem Netzwerk geliefert wird.

6. Software-Modul für eine Datenverarbeitungsanlage zur Durchführung des Verfahrens nach einem der vorhergehenden Ansprüche, **dadurch gekennzeichnet, dass** das Software-Modul so aufgebaut ist, dass die Programmbereiche (2, 3, 4) separat in Abhängigkeit von einem Identifikationssignal (6, 7) aufgerufen und abgearbeitet werden können.

7. Vorrichtung mit einer Datenverarbeitungsanlage, die ein Software-Modul nach Anspruch 6 zur Durchführung des Verfahrens nach einem der Ansprüche 1 bis 5 aufweist, **dadurch gekennzeichnet, dass** in der Vorrichtung Steuerungsaufgaben mit dem ersten Programmbereich (2) abarbeitbar sind und mindestens zwei Steuerungsanordnungen vorhanden sind, die unter Erzeugung eines Identifikationssignals (6, 7) mit einem jeweils vorgegebenen weiteren Programmbereich (3, 4) abgearbeitet werden.

8. Vorrichtung nach Anspruch 7, **dadurch gekennzeichnet, dass** die Vorrichtung (5) eine Herstellungsanlage für eine Mehrzahl von zumindest teilweise unterschiedlichen Produkten ist, wobei diese Produkte mit teilweise unterschiedlichen Steuerungsaufgaben unter Bereitstellung eines einheitlichen Anwenderprogramms (2, 3, 4) hergestellt werden.
